# EUROPEAN PATENT APPLICATION

(11) **EP 1 040 948 A1**
(43) Date of publication of application: **04.10.2000**
(21) Application number: 99949331.5
(22) Date of filing: 20.10.1999
(51) Int. Cl.: B60J 1/17, B60J 5/04

(54) **DOOR AND DOOR MODULE FOR VEHICLE**

(30) Priority: 21.10.1998 JP 30007398
(71) Applicant: ASAHI GLASS COMPANY LTD., Tokyo 100-8405 (JP)
(72) Inventor: ISHIKAWA, Kenichi Asahi Glass Company Ltd., Chita-gun Aichi 470-2300 (JP); HASHIMOTO, Hideyuki Asahi Glass Company Ltd., Chita-gun Aichi 470-2300 (JP)
(74) Representative: Müller-Boré & Partner Patentanwälte
(86) International application number: JP9905798
(87) International publication number: WO0023293

(57) **Abstract**

A door for vehicle, wherein a guide member forming a lifting mechanism which guides a carrier plate fitted to a window pane is fixedly mounted on at least either of first and second sashes beforehand so as to form a module in which the window pane, lifting mechanism, and first and second sashes are formed integrally with a base plate and the module is installed on a door main body, whereby an assembly process can be facilitated without obstructing the lifting up and down of the window pane.

## Description

### TECHNICAL FIELD

The present invention relates to a vehicle door and a vehicle door module to be mounted to the vehicle door, and a vehicle door and a vehicle door module capable of making the assembling process thereof simple, for instance.

### BACKGROUND ART

In general, a vehicle door includes a windowpane (a plate for a window), a door main body, a regulator, a latch, a first sash and a second sash, and so on. The windowpane opens and closes a window opening of the vehicle. The door main body is provided under the window opening and includes a housing space for housing the windowpane. The regulator vertically moves the windowpane between the window opening and the housing space. The latch is provided at a rear end of the housing space and works for engagement and disengagement with a bodywork when the vehicle door is opened and closed. The first and second sashes are provided in parallel with each other and, respectively, guide both sides of the windowpane.

The first sash and the second sash have a length extending from a vertically moving slot provided in a belt line mole of the door main body into the window opening. An upper sash extending between an upper end of the first sash and an upper end of the second sash, the first sash, the second sash and the belt line mole form the window opening. In the case of a so-called hardtop vehicle without an upper sash, the window opening is formed at a location that is surrounded by the vehicle body and the belt line mole when the door is closed.

On the other hand, vehicle doors have been recently provided as a module to simplify the assembling process. For example, the windowpane, the regulator, the first sash and the second sash are integrally combined through a base plate to provide a door module. Through a mounting opening, which has been formed at an upper end, a lower end, a side end, an exterior side, an interior side or somewhere else of the door main body, the door module is inserted and is mounted to the door main body, thus providing an assembled door.

The base plate is made of a plate-shaped metallic material having a certain plane shape, and extends between the first sash and the second sash. The base plate has door equipment, such as the regulator, a door inner handle, a speaker, a door latch, a room light, wire-harness, and different kinds of switches, fixed thereto.

By the way, the base plate is required to have rigidity enough to withstand the weight of the equipment since the base plate has such various equipment mounted thereto in the door thus prepared. On the other hand, there has been a demand for reduction in the weight of a door in consideration of a recent demand for reduction in the weight of a vehicle represented by a problem of reduction in fuel consumption. Although there is an idea of making the base plate of a resin, the idea is impractical since such required rigidity can not be ensured.

From the standpoint of reducing the weight of the door, there is an idea of simplifying the structure of the regulator. The reason is that a drop in the weight of the regulator significantly contributes to a reduction in the weight of the door since the regulator as well as the windowpane for a window among the equipment is heavy. However, simplification in the structure of the regulator makes it difficult to vertically move the windowpane in stable fashion. In other words, simplification in the structure of the regulator makes it easy for the windowpane to slant in a front and rear direction of the vehicle. As a result, the windowpane could contact with the bottom of a run channel formed in a sash to increase sliding resistance, interfering with the vertically moving of the windowpane.

It is an object of the present invention to provide a vehicle door and a vehicle door module capable of making the vertically moving direction of the windowpane stable, simplifying the assembling process, reducing the weight, and preventing the opening strength of the door from degrading.

### DISCLOSURE OF INVENTION

The present invention provides a vehicle door including at least a windowpane for opening/closing a window opening of a vehicle, a door main body provided under the window opening and having a housing space capable of housing the windowpane, a vertically moving device for vertically moving the windowpane between the window opening and the housing space, a first sash and a second sash for, respectively, guiding both sides of the windowpane, the first sash and the second sash being provided in parallel with each other, and a plate-shaped base plate extended between the first sash and the second sash, and a module provided in the housing space, the module comprising the windowpane, the vertically moving device, the first sash and the second sash incorporated with the base plate; characterized in that the vertically moving device includes at least two guides extending in a vertically moving direction of the windowpane and provided in parallel with each other, carrier plates for coupling the guides and the windowpane, and a driving unit; driving operation of the driving unit is transmitted to the carrier plates, and the carrier plates are guided by the guides to vertically move the windowpane; and the guides are mounted to the module so that the guides are incorporated with at least one of the first sash and the second sash so as to extend along a longitudinal direction of at least one of the first sash and the second sash.

The present invention also provides a vehicle door module to be mounted to a door main body for a vehicle, including at least a windowpane for opening/closing a window opening of a vehicle, a vertically moving device for vertically moving the windowpane, a first sash and a second sash for, respectively, guiding both sides of the windowpane, the first sash and the second sash being provided in parallel with each other, and a plate-shaped base plate extended between the first sash and the second sash, and the windowpane, the vertically moving device, the first sash and the second sash being incorporated with the base plate; characterized in that the vertically moving device includes at least two guides extending in a vertically moving direction of the windowpane and provided in parallel with each other, carrier plates for coupling the guides and the windowpane, and a driving unit; driving operation of the driving unit is transmitted to the carrier plates, and the carrier plates are guided by the guides to vertically move the windowpane; and the guides are incorporated with at least one of the first sash and the second sash so as to extend along a longitudinal direction of at least one of the first sash and the second sash.

### BRIEF DESCRIPTION OF DRAWINGS

Figure 1 is a schematic front view showing an example of the vehicle door with a vehicle door module and a door main body separated, according to the present invention;
Figure 2 is a front view showing a state wherein the vehicle door of Figure 1 has been assembled; and
Figure 3 is a front view showing another example of the vehicle door module according to the present invention.

### BEST MODE FOR CARRYING OUT THE INVENTION

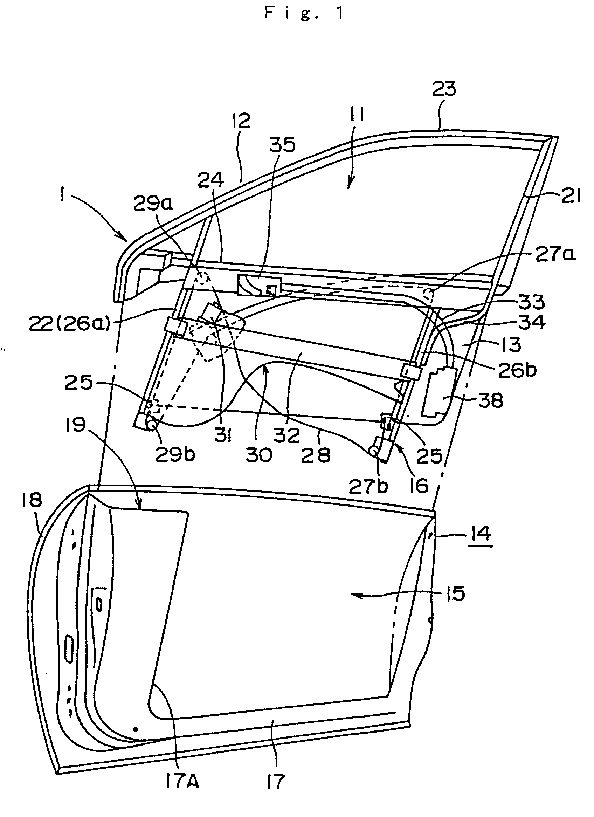

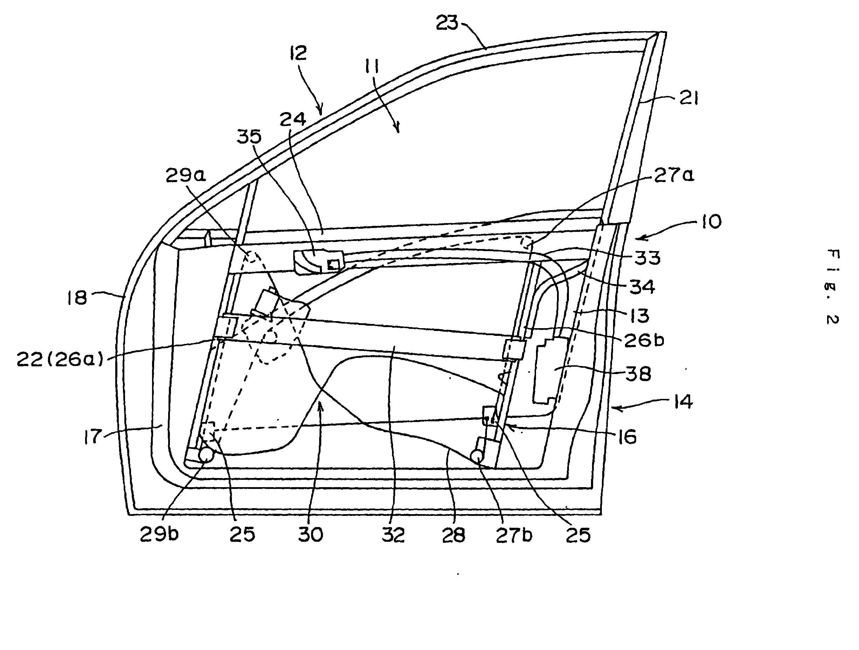

Now, the present invention will be described in detail, referring to the drawings. In Figure 1 is shown a schematic front view of an example of the vehicle door according to the present invention, wherein a door main body 14 stated later on, and a door module (hereinbelow, referred to as the module) 1 are shown in a separated state. In Figure 2 is shown a front view of a state wherein the door main body 14 and the module 1 shown in Figure 1 have been assembled. The vehicle door (hereinbelow, referred to as the door) 10 shown in Figures 1 and 2 is one for a right front seat of an automobile. In the example shown in these figures, it is shown that the window is opened. In Figure 2 is shown the door 10 as an interior side view, and when the door is assembled to a vehicle later on, a door trim is mounted on an inner panel 17.

The door 10 basically includes the door main body 14 and the module 1 with various kinds of door equipment incorporated therewith. The module 1 is mounted to the door main body 14 so as to have a portion thereof housed in a housing space 15 formed in the door main body 14. The door 10 is assembled by mounting the module 1 to the door main body 14.

The door main body 14 swings with respect to a bodywork for performing opening and closing actions, and the door main body includes the inner panel 17 on the front side of Figure 1 and an outer panel 18 mounted on an exterior side of the inner panel 17 (on the rear side of Figure 1). The door main body 14 has an upper end formed with a vertically moving slot 19, through which a windowpane 13 passes when vertically moving between the housing space 15 of the door main body 14 and a window opening 11. The housing space 15 is an envelop-shaped space, which is provided between the inner panel 17 and the outer panel 18. The inner panel 17 has a substantially central region formed with a cut-out portion 17A, which communicates with the vertically moving slot 19.

The module 1 is configured to include a sash 12, the windowpane 13 and a vertically moving device 16. The module 1 is provided so as to have a base plate 30 stated later on, a core member 32, the sash 12, the windowpane 13, the vertically moving device 16, a speaker, a latch 38 and various kinds of door equipment all incorporated therewith. The sash 12 forms the window opening 11 of the vehicle. The windowpane 13 opens and closes the window opening 11. The vertically moving device 16 is provided below the window opening 11 and vertically moves the windowpane 13 between the window opening 11 and the housing space 15 of the door main body 14.

The base plate 30 is a base with various kinds of door equipment mounted thereto. The base plate 30 is provided with the core member 32, on which the vertically moving device 16 is fixedly provided. The core member 32 has a coupling member 34 and a second sash 22 fixed to both ends thereof. The base plate 30 also has equipment, such as the speaker and the latch 36, mounted thereto.

Since the module 1 is provided with various kinds of door equipment incorporated with the base plate 30, a door can be easily assembled by housing the module 1 into the door main body 14. When the base plate 30 has essential portions made of resin and the core member 32 made of metal, the entire module can be made lighter with required rigidity ensured.

The sash 12 includes a first sash 21, a second sash 22 and an upper sash 23. The first sash 21 is provided to extend along a center pillar of the bodywork and to an upper portion in the housing space 15 of the door main body 14. The second sash 22 is provided to be parallel with the first sash 21 and extend to a lower portion in the housing space 15 of the door main body 14. The upper sash 22 extends along a front pillar and a roof rail of the bodywork and between upper ends of the first sash 21 and the second sash 22. Thus, a belt line mole 24 extending between the first sash 21 and the second sash 22, and the sash 12 forms the window opening 11.

The first sash 21 is coupled and incorporated with a guide 26b of the vertically moving device 16 through the coupling member 34 at a position below the belt line mole 24. The second sash 22 is coupled and incorporated with a guide 26a of the vertically moving device 16 at a position below the belt line mole 24. The upper sash 23 is formed in a substantially C-character shape (a non-angular C-character shape) in section so as to be engageable with both side edges and an upper edge of the windowpane 13. The first sash 21 and the second sash 22 have channels formed therein so as to be open toward the window opening 11 and are formed in a substantially C-character shape (a non-angular C-character shape) in section so as to guide both sides of the windowpane 13. The belt line mole 24 is provided so as to interpose the first sash 21 and the second sash 22 therein.

The sash 12 has the first sash 21, the second sash 22, the upper sash 23 and the belt line mole 24 formed in bent shapes so as to match with the design of the bodywork. The window opening 11 is located in a substantially trapezoid frame, which is defined by the first sash 21, the second sash 22, the upper sash 23 and the belt line mole 24.

The windowpane 13 is made of a substantially trapezoid glass plate so as to match with the window opening 11, and is formed in a bent shape so as to provide an arched surface or a spherical surface according to the design of the bodywork. The windowpane 13 is formed so as to have a lower edge thereof located at a lower position than the belt line mole 24 when the window opening 11 is closed.

The vertically moving device 16 includes the guides 26a, 26b extending along a vertically moving direction of the windowpane 13 and slidably guiding carrier plates 24, and a driving unit. The driving unit in the example is one called a wire type of regulator, which includes a pair of pulleys 27a, 27b provided on both ends of the guide 26b, a pair of pulleys 29a, 29b provided on both ends of the second sash, a looped wire 28 extended around the respective pulleys 27a, 27b, 29a, 29b, and an electric motor 31 fixed to the base plate 30.

The guides 26 are provided on respective front and rear portions of the door 10 as shown (26a, 26b). The front guide 26a is provided on a plane in parallel with the drawing sheet with the second sash 22 extending therein. Thus, the guide 26a is provided so as to deviate from the second sash 22 toward a direction perpendicular to the drawing sheet. With respect to the vertically moving direction of the windowpane 13, the guide 26a is provided along a longitudinal direction of the second sash 22. The rear guide 26b is provided on a surface of the coupling member 34 substantially flush with a surface in parallel with the drawing sheet with the first sash 21 extending therein. Thus, the guide 26b is provided so as to deviate from the first sash 21 toward a direction perpendicular to the drawing sheet. With respect to the vertically moving direction of the windowpane 13, the guide 26b is provided at such a position to deviate toward an inner side of the housing space 15 from the longitudinal direction of the first sash 21 (a position, which is deviated toward the front side of the vehicle with respect to the extension of the first sash 21).

Since the guides are thus provided on the basis of the respective sashes, the guides, which guide the vertically moving action of the windowpane and regulate the vertically moving direction of the windowpane, can have positional and directional accuracy improved. The rigidity required for guiding the vertically moving action of the windowpane and regulating the vertically moving direction can be obtained from the rigidity of the sashes. Thus, the entire door can be made lighter since the guides do not need to have great rigidity given thereto.

On the other hand, the windowpane 13 has a lower end provided with the two carrier plates 25 at positions corresponding to the guides 26a, 26b. The two carrier plates 25 have the wire 28 engaged therewith. The two carrier plates 25 were inserted into grooves formed in the guides 26, each of which opens toward a direction perpendicular to the drawing sheet. The wire 28 is circularly driven by the operation of the electric motor 31 to slide the carrier plates 25 along the grooves in longitudinal directions of the guides 26, vertically moving the windowpane 13 through the two carrier plates 25.

In this example, the module 1 includes a door inner handle 35, a latch cable 33 and the latch 38. The latch 38 is coupled to the door inner handle 35 through the latch cable 33. When a passenger operates the door inner handle 35, the latch 38 is actuated to open the door 1. The door inner handle 35 is fixed to an interior side of the belt line mole 24. Although the latch 38 is fixed to the module 1 through the latch cable 33, the latch 38 may be temporarily held on one of the base plate 30, the windowpane 13, the guide 26b and other members if the latch cable 33 does not have rigidity enough to support the latch 38. The temporal hold may be carried out by using a suitable adhesive tape or another member. In the example shown in Figure 1, the latch cable 33 has a portion in the vicinity of the latch 38 affixed to the coupling member 34 with an adhesive tape to temporarily hold the latch 38.

The latch projects toward a rear side with respect to a downward extension of the first sash in a state that the door is finally completed (the state shown in Figure 2 is one before the final state of the door). If the latch is fixed at the final position, the latch interferes with the door main body when the module is assembled to the door main body.

In order to cope this problem, in this example, the latch 38 is temporarily held at a position where the latch does not interfere with the door main body 14 when the module 1 is assembled to the main body 14. The position that is free from the interference is a position nearer to the front side than the downward extension of the first sash 21. In this example, the latch 38 is temporarily held on the module so as to be located in a space defined by the downward extension of the first sash 21, the guide 26b, the coupling member 24 and a lower imaginary line of the module 1. The position of the latch 38 is adjusted so as to project toward the rear side with respect to the downward extension of the first sash 21 after the module 1 is assembled to the door main body 14 (Figure 2).

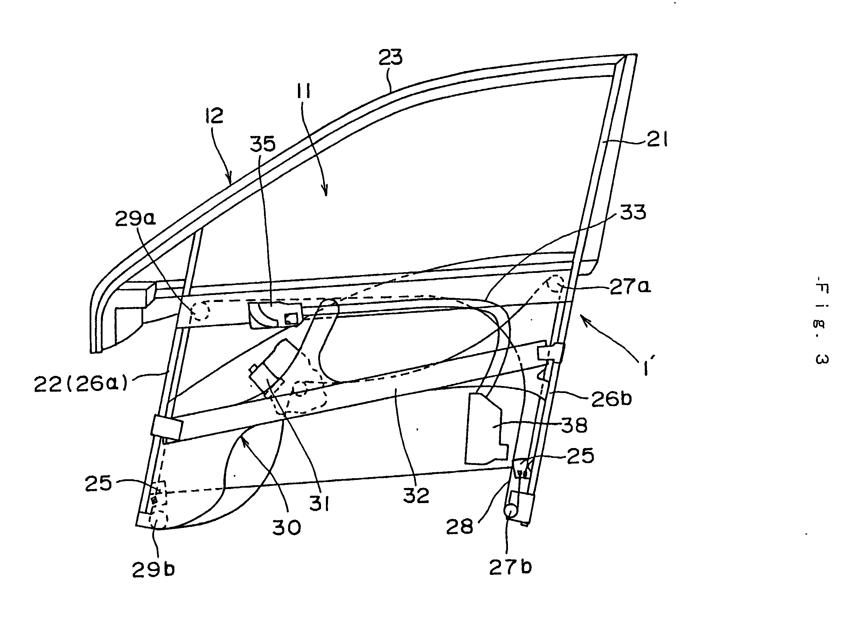

In Figure 3 is shown a front view of another example of the module according to the present invention. The members similar to those in the example just stated above are indicated by the same reference numerals, and explanation of these members is appropriately omitted. The module 1' in this example is different from the module 1 previously stated in terms of the following points, i.e., in terms of the mounting arrangement for the rear guide and in that the first sash 21 extends a lower portion in the housing space of the door main body.

The guides 26 are provided on the front end and the rear end of the door 10 as shown (26a, 26b). These guides 26a, 26b are provided on a plane in parallel with the drawing sheet with the second sash and the first sash 21 extend therein. Thus, the guides 26a, 26b are provided so as to deviate toward the directions perpendicular to the drawing sheet with respect to the second sash 22 and the first sash 21. With respect to the vertically moving direction of the windowpane 13, the guides 26a, 26b are provided along the longitudinal directions of the second sash 22 and the first sash 21.

The core member 32 fixed to the base plate 30 extends over substantially the entire length of the door in the front and rear direction. The core member 32 has the first sash 21 and the second sash 22 mounted thereto. The respective guides 26b, 26a are provided on the plane in parallel with the drawing sheet with the first sash 21 and the second sash 22 extending therein. The pulleys 27a, 27b, 29a, 29b are provided on both ends of respective portions of the second sash 22 and the first sash 21, which are housed in the housing space of the door main body.

On the other hand, the windowpane 13 has both ends of the lower side provided with the carrier plates 25. The carrier plates 25 are inserted into grooves in the guides 26a, 26b, each of which opens toward the direction perpendicular to the drawing sheet. The wire 28 engaged with the carrier plates 25 is circularly driven to slide the carrier plates 25 in longitudinal directions of the guide 26, vertically moving the windowpane 13.

As in the previous example, the latch 38 is temporarily held at a position where the latch does not interfere with the door main body 14 when the module 1 is assembled to the main body 14. The position that is free from the interference is a position nearer to the front side than the guide 26b. In this example, the latch 38 is temporarily held on the module so as to be located in a space defined by the guide 26b, the base plate and a lower imaginary line of the module 1. The latch 38 is temporarily held by affixing a portion of the latch cable 33 near to the latch 38 to the base plate with an adhesive tape.

As the windowpane in the present invention, a glass plate, a transparent resin plate, and another member are applicable. As the base plate and the core member, a member that has the base plate and the core member incorporated therewith by preparing these members from the same material in the forming process is applicable. In this case, the base plate and the core member may be made of a resin material or made of a metallic material. From the viewpoint of both of a reduction in the weight of the entire door and improvement in the vertically moving accuracy of the windowpane, it is preferable that the base plate is made of resin and the core member is made of metal as in the example. Parts, illustration of which is omitted in the drawings, may be suitably selected among the various door equipment, and the selected parts may be incorporated with the module.

With respect to the driving unit of the vertically moving device, various kinds of regulators may be adapted in place of a wire type of regulator as long as the carrier plates can be slidably guided by the guides. For example, a rack-pinion type of regulator wherein the carrier plates have pinions mounted thereto and racks are provided in parallel with the guides, may be employed. The wire type of regulator is preferable since the degree of freedom in the positions of various kinds of door equipment and the degree of freedom in design of the shape of the door main body can be improved.

The vehicle door and the vehicle door module according to the present invention are used, being mounted to various kinds of vehicles, such as an ordinary automobile and a truck. Since the present invention can provide doors with the weight reduced and the assembling process simplified and without degrading the vertically moving performance of the windowpane, it is preferable that the vehicle door and the vehicle door module according to the present invention is mounted to and utilized in a vehicle producible in mass production, in particular, a typical automobile.

### INDUSTRIAL APPLICABILITY

In accordance with the present invention, there is provided a vehicle door, which can simplify the assembling process without interferencing with the vertically moving action of the windowpane. In particular, the positional accuracy of the windowpane in the vertically moving direction of the windowpane and in a direction perpendicular to the vertically moving direction can be improved to attain a stable vertically moving motion of the windowpane since the guides for guiding the carrier plates mounted to the windowpane are preliminarily fixedly mounted to at least one of the first sash and the second sash.

## Claims

1. A vehicle door including at least a windowpane for opening/closing a window opening of a vehicle, a door main body to be provided under the window opening and having a housing space capable of housing the windowpane, a vertically moving device for vertically moving the windowpane between the window opening and the housing space, a first sash and a second sash for, respectively, guiding both sides of the windowpane, the first sash and the second sash being provided in parallel with each other, and a plate-shaped base plate extended between the first sash and the second sash, and a module provided in the housing space, the module comprising the windowpane, the vertically moving device, the first sash and the second sash incorporated with the base plate;
characterized in that the vertically moving device includes at least two guides extending in a vertically moving direction of the windowpane and provided in parallel with each other, carrier plates for coupling the guides and the windowpane, and a driving unit; driving operation of the driving unit is transmitted to the carrier plates, and the carrier plates are guided by the guides to vertically move the windowpane; and the guides are mounted to the module so that the guides are incorporated with at least one of the first sash and the second sash so as to extend along a longitudinal direction of at least one of the first sash and the second sash.

2. The vehicle door according to Claim 1, wherein the guides are incorporated with the first sash and the second sash.

3. The vehicle door according to Claim 1, wherein the first sash extends to an upper portion in the housing space, the second sash extends to a lower portion in the housing space, one of the at least two guides is mounted to the first sash through a coupling member at a position deviated from the longitudinal direction of the first sash, and the other guide is mounted to the second sash.

4. The vehicle door according to Claim 3, wherein the first sash is provided at an end near to a rear side of the vehicle, and the second sash is provided at an end near to a front side of the vehicle.

5. The vehicle door according to Claim 4, wherein the guide mounted to the first sash through the coupling member deviates toward the front side of the vehicle with respect to the longitudinal direction of the first sash.

6. A vehicle door module to be mounted to a door main body for a vehicle, including at least a windowpane for opening/closing a window opening of a vehicle, a vertically moving device for vertically moving the windowpane, a first sash and a second sash for, respectively, guiding both sides of the windowpane, the first sash and the second sash being provided in parallel with each other, and a plate-shaped base plate extended between the first sash and the second sash, and the windowpane, the vertically moving device, the first sash and the second sash being incorporated with the base plate;
characterized in that the vertically moving device includes at least two guides extending in a vertically moving direction of the windowpane and provided in parallel with each other, carrier plates for coupling the guides and the windowpane, and a driving unit; driving operation of the driving unit is transmitted to the carrier plates, and the carrier plates are guided by the guides to vertically move the windowpane; and the guides are incorporated with at least one of the first sash and the second sash so as to extend along a longitudinal direction of at least one of the first sash and the second sash.

7. The vehicle door module according to Claim 6, wherein the guides are integrally provided with the first sash and the second sash.

8. The vehicle door module according to Claim 7, wherein the first sash extends to an upper portion in the housing space, the second sash extends to a lower portion in the housing space, one of the at least two guides is mounted to the first sash through a coupling member at a position deviated from the longitudinal direction of the first sash, and the other guide is mounted to the second sash.

9. The vehicle door module according to Claim 8, wherein the first sash is provided at an end near to a rear side of the vehicle, and the second sash is provided at an end near to a front side of the vehicle.

10. The vehicle door module according to Claim 9, wherein the guide mounted to the first sash through the coupling member deviates toward the front side of the vehicle with respect to the longitudinal direction of the first sash.

11. The vehicle door module according to Claim 9 or 10, wherein a latch is temporarily held at a position nearer to the front side than the first sash.

12. The vehicle door module according to Claim 10 or 11, wherein the latch is temporarily held so as to be located in a space defined by a downward extension of the first sash, the guide mounded to the first sash, the coupling member 24 and a lower imaginary line of the module.
